(19) Europäisches Patentamt
European Patent Office
Office européen des brevets

(11) **EP 1 767 571 B1**

(12) **EUROPEAN PATENT SPECIFICATION**

(45) Date of publication and mention
of the grant of the patent:
**19.11.2008 Bulletin 2008/47**

(51) Int Cl.:
*C08K 3/04* *(2006.01)*       *C08L 9/00* *(2006.01)*

(21) Application number: **06120734.6**

(22) Date of filing: **15.09.2006**

(54) **Tire with tread containing tin coupled amine functionalized polybutadiene and nanostructured inversion carbon black**

Reifenlauffläche enthaltend ein Zinn/Amino-modifiziertes Polybutadien und einen nanostrukturierten Inversionskohlenstoff

Bande de roulement comportant du polybutadiène à fonction amine couplè par l'étain

(84) Designated Contracting States:
**DE FR GB IT**

(30) Priority: **21.09.2005 US 232569**

(43) Date of publication of application:
**28.03.2007 Bulletin 2007/13**

(73) Proprietor: **The Goodyear Tire & Rubber Company Akron, OH 44316-0001 (US)**

(72) Inventors:
• **Weydert, Marc**
  **L-8020, Strassen (LU)**
• **Klinkenberg, Maurice Peter Catharina Jozef**
  **L-7432, Gosseldange (LU)**
• **Thielen, Georges Marcel Victor**
  **L-4995, Schouweiler (LU)**

(74) Representative: **Kutsch, Bernd**
  **Goodyear S.A.,**
  **Patent Department,**
  **Avenue Gordon Smith**
  **7750 Colmar-Berg (LU)**

(56) References cited:
   **EP-A- 1 577 339**       **EP-A1- 1 318 172**

**Description**

Field of the Invention

This invention relates to a rubber composition containing a tin coupled amine functional polybutadiene and reinforcement comprising nanostructured inversion carbon black and to tire having such a rubber composite in its tread.

Background of the Invention

Rubber reinforcing carbon blacks are often used for reinforcement of rubber compositions used for various rubber based components of vehicular tires. Such rubber reinforcing carbon blacks are often referred to by their ASTM designations and such rubber reinforcing carbon blacks are referenced in, for example, The Vanderbilt Rubber Handbook, 1978 edition, Page 417.

Inversion carbon blacks have also been suggested for use in reinforcement of rubber compositions and are reported as being differentiated from the above referenced more conventional rubber reinforcing carbon blacks in a sense of having a particle size distribution which contains a small proportion of particles with large diameters which is said to lead to an improved resistance to abrasion for rubber compositions. For example, see US-B-6,056,933 and US-B- 6,251,983.

Nanostructured inversion carbon blacks are reported as being improved inversion carbon blacks, for use in reinforcement of rubber compositions are also presented in the US-B- 6,056,933 and US-B- 6,251,983, as well as a method of preparation, which are described in terms of their particle size distribution according to an absolute slope (AS) restriction, CTAB value range, and 24MP-DBP value range. Such carbon blacks are referred to herein as "nanostructured inversion carbon blacks".

Pneumatic tires conventionally contain a circumferential rubber tread with a running surface for the tire of a rubber composition comprising a conjugated diene based elastomer such as, for example mixtures of cis 1,4-polybutadiene rubber and styrene/butadiene elastomers which may also contain a cis 1,4-polyisoprene rubber.

Variations of polybutadiene elastomers are functionalized polybutadienes in a sense of having of functional terminal ends and/or functional vinyl substituents which are available to functionally react, or interact, with other materials where desired. Amine functionalized polybutadiene elastomers, particularly end, or terminal, amine functionalized polybutadiene elastomers have been prepared, for example, by polymerizing 1,3-butadiene monomer in the presence of a catalyst and an amine functionalized initiator compound. For example, see US-B- 6,211,321 and US-B- 6,111,045.

Further, such amine functionalized polybutadienes may be tin-coupled by, for example, by coupling the amine functionalized polybutadiene rubber with a tin coupling agent at or near the end of the polymerization used in synthesizing the polybutadiene. In the coupling process, live polymer chain ends react with the tin coupling agent (e.g. tin tetrachloride) thereby coupling polymer chains together and substantially increasing the overall molecular weight and therefore increasing its Mooney (ML1+4), (100˚C), viscosity value. For instance, up to four live chain ends can react with tin tetrahalides, such as tin tetrachloride, to thereby couple the four polymer chains together in perhaps what might be considered a star shaped configuration. For example, US-B-5,115,006.

The coupling of such tin coupled, terminal amine functionalized polybutadienes tends to at least partially break down during high shear mixing of a rubber composition which contains such tin coupled functionalized polybutadiene elastomer at an elevated temperature (e.g. 130˚C to 175˚C) in a manner that the aforesaid Mooney viscosity of the polybutadiene elastomer within the rubber composition is thereby reduced to render it more easily processable in an internal rubber mixer. A particular benefit in utilizing such amine functionalized polybutadiene elastomer in its coupled state in a rubber composition is seen in the sense of creating active sites on the chain ends of the polybutadiene elastomer, as the uncoupling occurs in situ within the rubber composition, which beneficially combine with the rubber reinforcing carbon black particles to form an enhanced rubber reinforcement network within the associated rubber composition, a phenomenon believed to be well known to those having skill in such art.

In the description of this invention, the term "phr" is used to designate parts by weight of a material per 100 parts by weight of elastomer. The terms "rubber" and "elastomer" may be used interchangeably unless otherwise indicated. The terms "vulcanized" and "cured" may be used interchangeably, as well as "unvulcanized" or "uncured", unless otherwise indicated. The term "Tg", if used, refers to glass transition temperature determined by DSC (differential scanning calorimeter) at a rate of temperature rise of 20˚C per minute, unless otherwise specified (e.g. 10˚C rise per minute), according to ASTM D3418-99. The glass transition temperatures are typically inflection point based, unless otherwise specified such as, for example, onset glass transition temperatures

Summary and Practice of the Invention

In accordance with this invention, a tire is provided having a tread of a rubber composition comprising, based upon parts by weight per 100 parts by weight of elastomer (phr),

(A) 100 phr of elastomers comprising:

(1) 5 to 50, alternately from 15 to 50, phr of polybutadiene elastomer comprising a tin coupled amine end functionalized polybutadiene elastomer, and
(2) 50 to 95, alternately from 50 to 85, phr of at least one additional conjugated diene-based elastomer selected from polymers of isoprene, copolymers of isoprene and 1,3-butadiene and copolymers of styrene and at least one of isoprene and 1,3-butadiene; and

(B) 35 to 120 phr of rubber reinforcing filler comprising nanostructured inversion carbon black.

In further accordance with this invention, said nanostructured inversion carbon black preferably has:

(A) a particle size distribution curve with an absolute slope (AS) of less than 400,000 $nm^3$, alternately less than 200,000 $nm^3$, and preferably also greater than 100,000 $nm^3$, the absolute slope (AS) determined as described in US-B- 6,056,933 from measured aggregate size distribution using the following formula:

$$AS = \frac{\sum\limits_{i=1}^{k} H_i(x_i - \overline{x})^3}{\sum\limits_{i=1}^{k} H_i}$$

wherein $H_i$ denotes the frequency at which the particle diameter $x_i$ occurs and x is the particle diameter of the aggregate, whose weight corresponds to the average particle weight of the carbon black aggregate, the summation being carried out in the range of 1 to 3000 nm in equidistant spacing for each nanometer,
(B) a CTAB value (ASTM D-3765) in a range of from 20 to 190, alternately from 60 to 140, $m^2/g$, and
(C) a 24M4-DBP absorption value (ASTM D-3493) in a range of from 40 to 140 cc/100g.

In additional accordance with this invention, said 35 to 120 phr of rubber reinforcing filler may comprise :

(A) 30 to 100 phr of said nanostructured inversion carbon black, and
(B) 5 to 90 phr of at least one rubber reinforcing carbon black (classical rubber reinforcing carbon black) having a combination of Iodine adsorption value (ASTM D-1510) in a range of from 90 to 150 g/kg and a DBP (dibutylphthate) value (ASTM D-2414) in a range of from 100 to 200 cc/100g.

In further accordance with this invention, said 35 to 120 phr of rubber reinforcing filler may comprise :

(A) 35 to 110 phr of said nanostructured inversion carbon black, and
(B) 10 to 85 phr of precipitated silica (synthetic amorphous silica aggregates) which contains hydroxyl groups (e.g. silanol groups) thereon, and
(C) optionally a coupling agent for said precipitated silica having a moiety reactive with said hydroxyl groups (e.g. silanol groups) on said precipitated silica and another different moiety interactive with said polybutadiene elastomer and said additional conjugated diene-based elastomer.

In additional accordance with this invention, said 35 to 120 phr of rubber reinforcing filler may comprise:

(A) 35 to 110 phr of rubber reinforcing carbon black comprising:

(1) 30 to 105 phr of said nanostructured inversion carbon black, and
(2) 5 to 80 phr of classical rubber reinforcing carbon black having said combination of Iodine adsorption and DBP values, and

(B) 10 to 85 phr of said precipitated silica, and
(C) optionally a coupling agent for said precipitated silica having a moiety reactive with said hydroxyl groups (e.g. silanol groups) on said precipitated silica and another different moiety interactive with said polybutadiene elastomer and said additional conjugated diene-based elastomer.

A representative example of said nanostructured inversion carbon black is Ecorax 1720™ from Degussa. Inversion carbon blacks, including nanostructured inversion carbon blacks, and preparation thereof, are reported in US-B- 6,251,983 in terms of said SA, CTAB and 24M4-DBP characterization as exemplified as EB171 therein.

In a paper entitled "The Effect of Filler-Filler and Filler-Elastomer Interaction on Rubber Reinforcement" by J. Frohlich, W. Neidermeir and H. Luginsland (year 2004) of Composites: Part A from "Science Direct" at www.sciencedirect.com, EB171 referred to as a nanostructured black, as differentiated from an N234 ASTM black, in that:

*The novel nanostructured blacks, produced by a physical modification of the carbon black production process, are characterized by a high surface roughness and large number of high-energy patches, or sites, equivalent to a high surface activity.*

*The origin of the roughness found at the carbon black surface is explained by a reduced lateral extension of the nanocrystallites linked by a high degree of geometrical disarrangement.*

In US-B- 6,056,933, it is mentioned that the absolute slope of inversion carbon blacks (as distinguished from the absolute slope of nanostructured carbon blacks), according to patent publication DE-A- 195,565 is higher than 400,000 $nm^3$, and the measurement of size distribution for the for the absolute slope (AS) for the nanostructured inversion carbon black is mentioned in the aforesaid US-B- 6,251,983. It is mentioned that ASTM D-1765 might be used for determining the average particle diameter of the carbon black aggregate.

A significant aspect of the use of the tin coupled amine functionalized polybutadiene elastomer in combination with the nanostructured inversion carbon black in the rubber composition for a tire tread of this invention, as hereinbefore discussed, in the sense of the tin coupled elastomer promoting a better hysteresis property (reduced hysteresis) for the associated rubber composition in combination with the nanostructured inversion carbon black also promoting a better hysteresis property (reduced hysteresis) because of its more distorted surface structure in a sense of the surface being significantly rougher in nature (having a rougher surface texture) than conventional, or classical, rubber reinforcing carbon blacks.

As hereinbefore discussed, classical rubber reinforcing carbon blacks, such as those used for tire treads, may have DBP (dibutyl phthalate) values (ASTM D2414) and Iodine values (ASTM D1510) in a range of, for example, 100 to 200 cc/100g and in a range of 90 to 150 g/kg. Representative of such highly reinforcing carbon blacks are, for example, carbon blacks having ASTM designations N110, N121 and N234, which are carbon blacks often used for tire tread rubber compositions.

In practice, the tin-coupled amine end functionalized polybutadiene elastomer may be prepared by reacting "living" amine end functionalized polybutadiene having lithium end groups with a tin halide, such as tin tetrachloride. The coupling step might be carried out as a batch process, although it may be carried out as a continuous process.

In practice, the tin coupling agent employed may normally be a tin tetrahalide, such as tin tetrachloride, tin tetrabromide, tin tetrafluoride or tin tetraiodide, with tin tetrachloride usually being preferred. However, tin trihalides can also optionally be used where appropriate. In cases where tin trihalides are utilized, a coupled polymer having a maximum of three arms results. To induce a higher level of branching, tin tetrahalides are normally preferred.

In practice, the tin coupled amine end functionalized polybutadiene elastomer is comprised of a tin atom having about four (where a tin tetrahalide is used) or about three (there a tin trihalide is used) polybutadiene arms covalently bonded thereto. The tin-coupled amine functionalized polybutadiene elastomer may be asymmetrical in a sense that the individual polybutadiene portions of the amine functionalized polybutadiene arms may be of significantly different molecular weights ranging, for example, from 20,000 to 100,000 (or even higher) number average molecular weights.

A representative example of a tin coupled, amine end functionalized polybutadiene elastomer is BR1250H™ rubber from the Nippon Zeon Company.

Such organoalkoxymercaptosilanes may be capped with various moieties as discussed above.

A representative example of a capped organoalkoxymercaptosilane coupling agent useful for this invention is a liquid 3-octanoylthio-1-propyltriethoxysilane as an NXT™ Silane from the GE Silicones Company.

The coupling agent may, for example, be added directly to the elastomer mixture or may be added as a composite of precipitated silica and such coupling agent formed by treating a precipitated silica therewith or by treating a colloidal silica therewith and precipitating the resulting composite.

For example, said silica (e.g. precipitated silica), or at least a portion of said silica, may be pre-treated prior to addition to said elastomer(s):

(A) with an alkylsilane of the general Formula (II), or
(B) with said bis(3-triethoxysilylpropyl) polysulfide having an average of from about 2 to about 4 connecting sulfur atoms in its polysulfidic bridge, or
(C) with said organomercaptosilane of the general Formula (I), or
(D) with a combination of said alkylsilane of general Formula (I) and said bis(3-triethoxysilylpropyl) polysulfide having an average of from about 2 to about 4 connecting sulfur atoms in its polysulfidic bridge, or
(E) with a combination of said alkylsilane of general Formula (II) and said organomercaptosilane of general Formula (I);

wherein said alkylsilane of the general Formula (I) is represented as:

$$(II) \qquad X_n - Si - R_{6(4-n)}$$

wherein $R_6$ is an alkyl radical having from 1 to 18 carbon atoms, preferably from 1 through 4 carbon atoms; n is a value of from 1 through 3; X is a radical selected from the group consisting of halogens, preferably chlorine, and alkoxy groups selected from methoxy and ethoxy groups, preferably an ethoxy group.

A significant consideration for said pre-treatment of said silica is to reduce, or eliminate, evolution of alcohol in situ within the rubber composition during the mixing of the silica with said elastomer such as may be caused, for example, by reaction of such coupling agent contained within the elastomer composition with hydroxyl groups (e.g. silanol groups) contained on the surface of the silica.

It is readily understood by those having skill in the art that the rubber composition would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical amounts of tackifier resins, if used, may comprise from 0.5 to 10 phr. Typical amounts of processing aids, if used, may comprise from 1 to up to 50 phr depending somewhat upon the processing aid and intended properties of the rubber composition. Such processing aids may include aromatic, napthenic, and/or paraffinic processing oils. Typical amounts of antioxidants may comprise from 1 to 5 phr. A representative antioxidant may be diphenyl-p-phenylenediamine. Typical amounts of antiozonants may comprise from 1 to 5 phr. Typical amounts of fatty acids, if used, which can include stearic acid, may comprise from 0.5 to 3 phr. Typical amounts of zinc oxide may comprise 1 to 5 to 10 phr. Typical amounts of waxes may comprise 1 to 5 phr. Typical amounts of peptizers, if used, may comprise 0.1 to 1 phr.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging, for example, from 0.5 to 4 phr.

Accelerators are used to control the time and/or temperature required for vulcanization and to improve the properties of the vulcanizate. In one embodiment, a single accelerator system may be used, i.e., primary accelerator. Preferably, a primary accelerator(s) is used in total amounts ranging from 0.5 to 4. In another embodiment, combinations of a primary and a secondary accelerator might be used with the secondary accelerator being used in smaller amounts in order to activate and to improve the properties of the vulcanizate. Suitable types of accelerators that may be used in the present invention are amines, disulfides, guanidines, thioureas, thiazoles, thiurams, sulfenamides, sulfenimides, dithiocarbamates and xanthates. Preferably, the primary accelerator is a sulfenamide or sulfenimide. If a second accelerator is used, the secondary accelerator is preferably a guanidine, dithiocarbamate or thiuram compound.

The ingredients are typically mixed in at least two stages, namely, at least one non-productive stage (NP) followed by a productive mix stage (P). The final curatives are typically mixed in the final stage which is conventionally called the "productive" mix stage in which the mixing typically occurs at a temperature, or ultimate temperature, lower than the mix temperature(s) than the preceding non-productive mix stage(s).

The following examples are presented to illustrate the invention. The parts and percentages are by weight unless otherwise designated.

Example I

A series of rubber based compositions which contained carbon black and silica reinforcement were prepared which are referred to herein as Samples A through D, with Sample A, Sample B and Sample C being comparative Control Samples.

Control Sample A contained a combination of cis 1,4-butadiene rubber and solution polymerization derived styrene/butadiene copolymer rubber (oil extended with 37.5 parts oil per 100 parts by weight of the copolymer rubber) reinforced with classical N234 rubber reinforcing carbon black and precipitated silica, together with a coupling agent for the silica.

Control Sample B differed from Control Sample A in that it contained a combination of tin coupled amine end functionalized cis 1,4-butadiene rubber and solution polymerization derived styrene/butadiene copolymer rubber (oil extended with 37.5 parts oil per 100 parts by weight of the copolymer rubber) together with the reinforcement filler as the classical N234 rubber reinforcing carbon black and precipitated silica, together with a coupling agent for the silica.

Control Sample C differed from Control Sample A and Control Sample B in that it contained a combination of cis 1,4-butadiene rubber and solution polymerization derived styrene/butadiene copolymer rubber (oil extended with 37.5 parts oil per 100 parts by weight of the copolymer rubber) reinforced with a nanostructured inversion carbon black instead of the classical N234 carbon black, and precipitated silica, together with a coupling agent for the silica.

Experimental Sample D differed from Control Sample A, Control Sample B and Control Sample C in that it contained a combination of tin coupled amine end functionalized cis 1,4-butadiene rubber and solution polymerization derived styrene/butadiene copolymer rubber (oil extended with 37.5 parts oil per 100 parts by weight of the copolymer rubber) together with reinforcing filler as nanostructured inversion carbon black and precipitated silica, together with a coupling agent for the silica.

Accordingly, both Control Sample C and Experimental Sample D contained a nanostructured inversion carbon black instead of the N234 classical rubber reinforcing carbon black.

Accordingly, only Experimental Sample D contained a combination of both tin coupled amine end functionalized polybutadiene elastomer and nanostructured inversion carbon black.

For this Example, in what is usually referred as a first non-productive mixing stage or procedure (NP1), the Samples were prepared by first blending rubber compounding ingredients (other than sulfur curative and vulcanization accelerators) in an internal rubber mixer for about 6 minutes to a temperature of about 160˚C at which time the mixture was dumped from the mixer, open roll milled, sheeted out, and allowed to cool to below 40˚C.

The resulting mixture was than mixed in a second non-productive mixing stage in an internal rubber mixer (NP2) for about 6 minutes to a temperature of about 160˚C at which time the mixture was dumped from the mixer, open roll milled, sheeted out, and allowed to cool to below 40˚C.

The resulting mixture, in which is usually referred to as a productive mixing stage of procedure (P), was then mixed with sulfur and vulcanization accelerators in an internal rubber for about 1.5 minutes to a temperature of about 115˚C at which time the resulting mixture was dumped from the mixture, open roll milled, sheeted out, and allowed to cool to below 40˚C.

Compositions of the Samples are illustrated in the following Table 1.

Table 1

| | Samples | | | |
|---|---|---|---|---|
| | Control | Control | Control | |
| Material | A | B | C | D |
| First Non-Productive Mixing Step | | | | |
| Cis 1,4-polybutadiene rubber[1] | 25 | 0 | 25 | 0 |
| Tin coupled amino functional polybutadiene[2] | 0 | 25 | 0 | 25 |
| Solution SBR rubber[3] | 75 | 75 | 75 | 75 |
| Microcrystalline waxes | 3 | 3 | 3 | 3 |
| Stearic acid[4] | 3.5 | 3.5 | 3.5 | 3.5 |
| Silica[5] | 40 | 40 | 40 | 40 |
| Coupling agent[6] | 6.4 | 6.4 | 6.4 | 6.4 |
| | | | | |

(continued)

| | Samples | | | |
|---|---|---|---|---|
| | Control | Control | Control | |
| Material | A | B | C | D |
| First Non-Productive Mixing Step | | | | |
| Second Non-productive Mixing Step | | | | |
| N234 carbon black[7] | 40 | 40 | 0 | 0 |
| Nanostructure inversion carbon black[8] | 0 | 0 | 40 | 40 |
| Processing oil[9] | 7.5 | 7.5 | 7.5 | 7.5 |
| | | | | |
| Productive Mixing Step | | | | |
| Sulfur | 1.3 | 1.3 | 1.3 | 1.3 |
| Accelerator(s)[10] | 3.3 | 3.3 | 3.3 | 3.3 |
| Zinc oxide | 3 | 3 | 3 | 3 |

[1]Obtained as Budene™ 1207, as being oil extended but reported in terms of the rubber in the above Table, from The Goodyear Tire & Rubber Company

[2]Obtained as BR1250H™ rubber, as being oil extended but reported in terms of the rubber in the above Table, from the Nippon Zeon Company

[3]Obtained as SLR4630™ rubber, as being oil extended but reported in terms of the rubber in the above Table, from the Dow Chemical Company

[4]Stearic acid and a minor amount of palmitic and lineolic acids

[5]Precipitated silica as Zeosil 1165M™ from the Rhodia company

[6]Composite of about a 50/50 weight ratio of carbon black and a bis(3-triethoxysilylpropyl) polysulfide having an average in a range of from 2.2 to 2.6 connecting sulfur atoms in its polysulfidic bridge as Si266™ from the Degussa Company

[7]Rubber reinforcing (classical) carbon black as N234, an ASTM designation, having and Iodine value of 120 g/kg (ASTM D1510) and a DBP value of 125 cc/100g (ASTM D2414)

[8]A nanostructured inversion carbon black as Ecorax 1720™ from the Degussa Company understood to have a CTAB surface area of 121 $m^2$/g according to ASTM D3765, a particle size distribution curve with an absolute slope (AS) of less than 400,000 $nm^3$, and a 24M4-DBP absorption value within a range of 40 to 140 cc/100g

[9]Rubber processing oil as a TDAE (treated, distilled, aromatic extract) oil as Vivatec 500™ from H&R Chempharm

[10]Vulcanization accelerators of the sulfenamide and diphenyl guanidine types

Various physical properties of the Samples of Table 1 are reported in Table 2.

**Table 2**

| | Samples | | | |
|---|---|---|---|---|
| | Control | Control | Control | |
| Properties | A | B | C | D |
| Shore A Hardness (cured at 160˚C for 15 minutes) | | | | |
| 23˚C (ASTMD-2240) | 67.2 | 67.9 | 65.7 | 67.3 |
| | | | | |
| Rebound | | | | |
| 0˚C | 12.8 | 11.4 | 12.5 | 11.3 |

(continued)

| | Samples | | | |
|---|---|---|---|---|
| | Control | Control | Control | |
| Properties | <u>A</u> | <u>B</u> | <u>C</u> | <u>D</u> |
| Shore A Hardness (cured at 160˚C for 15 minutes) | | | | |
| 23˚C | 28.3 | 26.3 | 29.7 | 29.1 |
| 100˚C | 58.5 | 58.0 | 60.2 | 60.8 |
| | | | | |
| <u>Stress-strain (Zwick Ring)</u>[1] | | | | |
| Tensile Strength (MPa) | 16.5 | 17.3 | 17.5 | 16.7 |
| Elongation (%) | 449 | 456 | 453 | 425 |
| Modulus (100%), ring, (MPa) | 2.5 | 2.6 | 2.7 | 2.8 |
| Modulus (200%), ring, (MPa) | 6.4 | 6.5 | 6.9 | 7.1 |
| Modulus (300%), ring, (MPa) | 11.3 | 11.5 | 12.0 | 12.3 |
| | | | | |
| <u>RPA, 100˚C, 1Hz</u>[2] | | | | |
| Storage modulus G' (1% strain), MPa | 2.54 | 2.73 | 2.53 | 2.59 |
| Storage modulus G' (50% strain), MPa | 1.00 | 1.05 | 1.02 | 1.06 |
| Tan Delta (10% strain) | 0.146 | 0.146 | 0.133 | 0.131 |
| [1]See ASTM D412<br>[2]Data obtained according to Rubber Process Analyzer as RPA 2000™ instrument by Alpha Technologies, formerly the Flexsys Company and formerly the Monsanto Company. References to an RPA-2000 instrument may be found in the following publications: H. A. Palowski, et al, Rubber World, June 1992 and January 1997, as well as Rubber & Plastics News, April 26 and May 10, 1993. | | | | |

It can be seen from Table 2 that the replacement of the cis 1,4-polybutadiene rubber of Sample A with the tin coupled amine end-functional polybutadiene elastomer for Sample B resulted in an increase in hysteresis in a sense of reduction of 0˚C rebound value (but essentially no change in the 100˚C rebound value), as compared to Sample A while substantially maintaining the remainder of the reported physical properties. This decrease in rebound value at 0˚C (increase in hysteresis) for Sample B is considered herein as being predictive of better wet traction for a tire having a tread of such rubber composition.

It can further be seen from Table 2 that the replacement of the rubber reinforcing carbon black of Sample A with the nanostructured inverse carbon black in Sample C resulted an reduction in hysteresis in a sense of increase of 100˚C rebound value (but essentially no change in the 0˚C rebound value), as compared to Sample A while substantially maintaining the remainder of the reported physical properties. This increase in rebound value at 100˚C (decrease in hysteresis) for Sample C is considered herein as being predictive of better (reduced) rolling resistance for a tire having a tread of such rubber composition.

It can additionally be seen from Table 2 that the placement of both the cis 1,4-polybutadiene rubber and rubber reinforcing carbon black of Sample A with the tin coupled amine end functionalized polybutadiene and the nanostructured inverse carbon black in Sample D resulted in both an increase in hysteresis in a sense of decreased 0˚C rebound value and a decrease in hysteresis in a sense of an increase in 100˚C rebound value, as compared to Sample A while substantially maintaining the remainder of the reported physical properties. This combination of decrease in rebound value at 0˚C (increase in hysteresis) and increase in rebound value at 100˚C (decrease in hysteresis) for Sample D is considered herein to be a significant discovery as being predictive of both better wet traction and better (reduced) rolling resistance for a tire having a tread of such rubber composition, particularly while substantially maintaining the remainder of the reported physical properties.

**Claims**

1. A tire having a tread of a rubber composition comprising, based upon parts by weight per 100 parts by weight of elastomer (phr),

   a) 100 phr of elastomers comprising:

   (1) from 5 to 50 phr of polybutadiene elastomer comprising a tin coupled amine end functionalized polybutadiene elastomer, and
   (2) from 50 to 95 phr of at least one additional conjugated diene- based elastomer selected from polymers of isoprene, copolymers of isoprene and 1,3-butadiene and copolymers of styrene and at least one of isoprene and 1,3-butadiene; and

   b) from 35 to 120 phr of rubber reinforcing filler, wherein said reinforcing filler comprises nanostructured inversion carbon black, wherein the rubber composition further comprises precipitated silica together with a coupling agent, and wherein said coupling agent is:

   an organoalkoxymercaptosilane composition of the general Formula (I) represented as

   $$(I) \qquad (X)_n(R^7O)_{3-n} - Si - R_8-SH$$

   wherein X is a radical selected from chlorine, bromine and alkyl radicals having from one to 16 carbon atoms; wherein $R^7$ is an alkyl radical having from 1 through 18 carbon atoms; wherein $R_8$ is an alkylene radical having from one to 16 carbon atoms, preferably a propylene radical; and n is an average value of from zero through 3, and wherein, in such cases where n is zero or 1, $R^7$ may be the same or different for each ($R^7O$) moiety in the composition; or
   an organoalkoxymercaptosilane in a form of the said organoalkoxymercaptosilane of the general Formula I having its mercapo moiety capped with a moiety which can uncap its mercapto group.

2. The tire of claim 1, wherein said nanostructured inversion carbon black has:

   (A) a particle size distribution curve with an absolute slope (AS) of less than 400,000 nm$^3$ and greater than 100,000 nm$^3$, the absolute slope (AS) as determined from measured aggregate size distribution using the following formula:

   $$AS = \frac{\sum_{i=1}^{k} H_i(x_i - \overline{x})^3}{\sum_{i=1}^{k} H_i}$$

   wherein $H_i$ denotes the frequency at which the particle diameter $x_i$ occurs and x is the particle diameter of the aggregate, whose weight corresponds to the average particle weight of the carbon black aggregate, the summation being carried out in the range of 1 to 3000 nm in equidistant spacing for each nanometer; and/or
   (B) a CTAB value (ASTM D-3765) in a range of from 20 to 190 m$^2$/g; and/or
   (C) a 24M4-DBP absorption value (ASTM D-3493) in a range of from 40 to 140 cc/100g.

3. The tire of either of the preceding claims wherein said 35 to 120 phr of rubber reinforcing filler is comprises:

   (A) from 30 to 100 phr of said nanostructured inversion carbon black, and

(B) from 5 to 90 phr of at least one rubber reinforcing carbon black having a combination of Iodine adsorption value (ASTM D-1510) in a range of from 90 to 150 g/kg and a DBP value (ASTM D-2414) in a range of from 100 to 200 cc/100g.

4. The tire of at least one of the preceding claims wherein said 35 to 120 phr of rubber reinforcing filler comprises:

   (A) from 5 to 90 phr of said nanostructured inversion carbon black; and
   (B) from 10 to 85 phr of precipitated silica which contains hydroxyl groups thereon; and
   (C) optionally a coupling agent for said precipitated silica having a moiety reactive with said hydroxyl groups on said precipitated silica and another different moiety interactive with said polybutadiene elastomer and said additional conjugated diene-based elastomer.

5. The tire of at least one of the preceding claims wherein said tin-coupled amine end functionalized polybutadiene elastomer is prepared by reacting "living" amine end functionalized polybutadiene having lithium end groups with tin tetrachloride.

6. The tire of at least one of the preceding claims wherein said additional conjugated diene-based elastomers are selected from at least one of natural cis 1,4-polyisoprene, synthetic cis 1,4-polyisoprene, cis 1,4-polybutadiene, styrene/butadiene copolymers, isoprene/butadiene copolymers, styrene/isoprene/butadiene terpolymers, high vinyl polybutadiene rubber containing from 30 to 90 percent vinyl 1,2-groups and 3,4-polyisoprene elastomer, wherein said 3,4-polyisoprene elastomer is used in a range of from 5 20 phr in said rubber composition.

7. The tire of at least one of the preceding claims, wherein said organoalkoxymercaptosilane is selected from at least one of triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, tripropoxy mercaptopropyl silane, ethoxy dimethoxy mercaptopropylsilane, ethoxy diisopropoxy mercaptopropylsilane, ethoxy didodecyloxy mercaptopropylsilane and ethoxy dihexadecyloxy mercaptopropylsilane.

8. The tire of at least one of the preceding claims, wherein said rubber reinforcing filler further comprises precipitated silica together with a coupling agent, wherein said capped organoalkoxymercaptosilane a liquid 3-octanoylthio-1-propyltriethoxysilane.

9. A rubber composition comprising, based upon parts by weight per 100 parts by weight of elastomer (phr),

   (A) 100 phr of elastomers comprising:

      (1) from 5 to 50 phr of polybutadiene elastomer comprising a tin coupled amine end functionalized polybutadiene elastomer, and
      (2) from 50 to 95 phr of at least one additional conjugated diene-based elastomer selected from polymers of isoprene, copolymers of isoprene and 1,3-butadiene and copolymers of styrene and at least one of isoprene and 1,3-butadiene; and

   (B) from 35 to 120 phr of rubber reinforcing filler, wherein said reinforcing filler comprises nanostructured inversion carbon black, wherein the rubber composition further comprises precipitated silica together with a coupling agent, and wherein said coupling agent is:

      an organoalkoxymercaptosilane composition of the general Formula (I) represented as

$$(I) \qquad (X)_n(R^7O)_{3-n} - Si - R_8\text{-SH}$$

      wherein X is a radical selected from chlorine, bromine and alkyl radicals having from one to 16 carbon atoms; wherein $R^7$ is an alkyl radical having from 1 through 18 carbon atoms; wherein $R_8$ is an alkylene radical having from one to 16 carbon atoms, preferably a propylene radical; and n is an average value of from zero through 3, and wherein, in such cases where n is zero or 1, $R^7$ may be the same or different for each $(R^7O)$ moiety in the composition; or
      an organoalkoxymercaptosilane in a form of the said organoalkoxymercaptosilane of the general Formula I having its mercapo moiety capped with a moiety which can uncap its mercapto group.

Representative of additional conjugated diene-based elastomers for use in the tire tread rubber composition, (in addition to said tin coupled amine end functionalized polybutadiene) are, for example, cis 1,4-polyisoprene (natural and synthetic), cis 1,4-polybutadiene, styrene/butadiene copolymers (aqueous emulsion polymerization prepared and organic solvent solution polymerization prepared), isoprene/butadiene copolymers, styrene/isoprene/butadiene terpolymers, high vinyl polybutadiene rubber containing from 30 to 90 percent vinyl 1,2-groups and 3,4-polyisoprene elastomer (with the 3,4-polyisoprene elastomer preferably being used in amounts in a range of from 5 to 20 phr in the rubber composition).

The synthetic amorphous silica, preferably precipitated silica, generally employed in this invention, are those obtained by the acidification of a soluble silicate, e.g., sodium silicate, usually in the presence of an electrolyte, and may include co-precipitated silica and a minor amount of aluminum, as is considered herein to be well known to those having skill in such art.

Various commercially available precipitated silicas may be considered for use in this invention such as, silicas from PPG Industries under the Hi-Sil trademark with designations Hi-Sil 210, Hi-Sil 243, etc; silicas from Rhodia as, for example, Zeosil 1165MP, silicas from Degussa AG with, for example, designations VN2 and VN3, as well as other grades of silica, particularly precipitated silicas, which can be used for elastomer reinforcement.

Said coupling agent is an organoalkoxymercaptosilane composition of the general Formula (I) represented as:

$$(I) \qquad (X)_n(R^7O)_{3-n} - Si - R_8 - SH$$

wherein X is a radical selected from a halogen, namely chlorine or bromine and preferably a chlorine radical, and from alkyl radicals having from one to 16, preferably from one through 4, carbon atoms, preferably selected from methyl, ethyl, propyl (e.g. n-propyl) and butyl (e.g. n-butyl) radicals; wherein $R^7$ is an alkyl radical having from 1 through 18, alternately 1 through 4, carbon atoms preferably selected from methyl and ethyl radicals and more preferably an ethyl radical; wherein $R_8$ is an alkylene radical having from one to 16, preferably from one through 4, carbon atoms, preferably a propylene radical; and n is an average value of from zero through 3, preferably zero, and wherein, in such cases where n is zero or 1, $R^7$ may be the same or different for each $(R^7O)$ moiety in the composition, or
an organoalkoxymercaptosilane in a form of the said organoalkoxymercaptosilane (of the general Formula I) having its mercapo moiety capped with a moiety which can uncap its mercapto group during selected processing of the rubber composition, for example and depending upon the nature of the capping moiety and rubber composition itself, upon heating to an elevated temperature in the presence of an amine.

Representative examples of various organoalkoxymercaptosilanes are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, tripropoxy mercaptopropyl silane, ethoxy dimethoxy mercaptopropylsilane, ethoxy diisopropoxy mercaptopropylsilane, ethoxy didodecyloxy mercaptopropylsilane and ethoxy dihexadecyloxy mercaptopropylsilane.

**Patentansprüche**

1. Reifen mit einer Lauffläche aus einer Kautschukzusammensetzung, umfassend, auf Basis von Gewichtsteilen pro 100 Gewichtsteile Elastomer (ThK),

    a) 100 ThK Elastomere, umfassend:

        (1) 5 bis 50 ThK Polybutadienelastomer, umfassend ein zinngekoppeltes, amin-endfunktionalisiertes Polybutadienelastomer, und
        (2) 50 bis 95 ThK mindestens eines zusätzlichen Elastomers auf Basis konjugierten Diens, ausgewählt aus Polymeren von Isopren, Copolymeren von Isopren und 1,3-Butadien und Copolymeren von Styrol und mindestens einem von Isopren und 1,3-Butadien; und

    b) 35 bis 120 ThK Kautschukverstärkungsfüllstoff, wobei der Verstärkungsfüllstoff nanostrukturiertes Inversions-Carbon Black umfasst, wobei die Kautschukzusammensetzung weiter ausgefälltes Silika zusammen mit einem Kopplungsmittel umfasst, und wobei das Kopplungsmittel ist:

eine Organoalkoxymercaptosilanzusammensetzung der allgemeinen Formel (I), dargestellt als

$$(I) \qquad (X)_n(R^7O)_{3-n}\text{-Si-}R_8\text{-SH}$$

wobei X ein Radikal ist, ausgewählt aus Chlor, Brom und Alkylradikalen mit einem bis 16 Kohlenstoffatomen; wobei $R^7$ ein Alkylradikal mit 1 bis einschließlich 18 Kohlenstoffatomen ist; wobei $R_8$ ein Alkylenradikal mit einem bis 16 Kohlenstoffatomen, bevorzugt ein Propylenradikal, ist; und n ein Durchschnittswert von null bis einschließlich 3 ist und wobei, in solchen Fällen, wo n null oder 1 ist, $R^7$ für jeden $(R^7O)$-Anteil in der Zusammensetzung das gleiche oder verschieden sein kann; oder

ein Organoalkoxymercaptosilan in einer Form des besagten Organoalkoxymercaptosilans der allgemeinen Formel I, dessen Mercaptoanteil mit einem Anteil endgruppenverschlossen ist, der seine Mercaptogruppe öffnen kann.

2. Reifen nach Anspruch 1, wobei das nanostrukturierte Inversions-Carbon Black aufweist:

(A) eine Partikelgrößenverteilungskurve mit einer absoluten Steigung (AS) von weniger als 400.000 $nm^3$ und höher als 100.000 $nm^3$, wobei die absolute Steigung (AS) aus der gemessenen Aggregatsgrößenverteilung bestimmt ist, unter Anwendung der folgenden Formel:

$$AS = \frac{\displaystyle\sum_{i=1}^{k} H_i(x_i - \bar{x})^3}{\displaystyle\sum_{i=1}^{k} H_i}$$

wobei $H_i$ die Frequenz bezeichnet, mit der der Partikeldurchmesser $X_i$ auftritt, und x der Partikeldurchmesser des Aggregats ist, dessen Gewicht dem durchschnittlichen Partikelgewicht des Carbon Black-Aggregats entspricht, wobei die Aufrechnung im Bereich von 1 bis 3000 nm in gleicher Beabstandung für jeden Nanometer durchgeführt wird; und/oder
(B) einen CTAB-Wert (ASTM D3765) in einem Bereich von 20 bis 190 $m^2$/g; und/oder
(C) einen 24M4-DBP-Absorptionswert (ASTM D-3493) in einem Bereich von 40 bis 140 cc/100g.

3. Reifen nach einem der beiden vorhergehenden Ansprüche, wobei die 35 bis 120 ThK Kautschukverstärkungsfüllstoff umfassen:

(A) 30 bis 100 ThK des nanostrukturierten Inversions-Carbon Blacks, und
(B) 5 bis 90 ThK mindestens eines Kautschukverstärkungs-Carbon Blacks mit einer Kombination von Iodabsorptionswert (ASTM D-1510) in einem Bereich von 90 bis 150 g/kg und einem DBP-Wert (ASTM D-2414) in einem Bereich von 100 bis 200 cc/100g.

4. Reifen nach mindestens einem der vorhergehenden Ansprüche, wobei die 35 bis 120 ThK Kautschukverstärkungsfüllstoff umfassen:

(A) 5 bis 90 ThK des nanostrukturierten Inversions-Carbon Blacks; und
(B) 10 bis 85 ThK ausgefälltes Silika, das Hydroxylgruppen darauf enthält; und
(C) gegebenenfalls ein Kopplungsmittel für das ausgefällte Silika, das einen Anteil, der mit den Hydroxylgruppen an dem ausgefällten Silika reaktiv ist, und einen anderen, unterschiedlichen Anteil, der mit dem Polybutadienelastomer und dem zusätzlichen Elastomer auf Basis konjugierten Diens in Wechselwirkung tritt, aufweist.

5. Reifen nach mindestens einem der vorhergehenden Ansprüche, wobei das zinngekoppelte aminendfunktionalisierte Polybutadienelastomer durch Reagieren "lebenden" amin-endfunktionalisierten Polybutadiens, das Lithiumendgruppen aufweist, mit Zinntetrachlorid hergestellt wird.

6. Reifen nach mindestens einem der vorhergehenden Ansprüche, wobei die zusätzlichen Elastomere auf Basis konjugierten Diens ausgewählt sind aus mindestens einem von natürlichem cis-1,4-Polyisopren, synthetischem cis-1,4-Polyisopren, cis-1,4-Polybutadien, Styrol-Butadien-Copolymeren, Isopren-Butadien-Copolymeren, Styrol-Isopren-Butadien-Terpolymeren, hoch-vinylhaltigem Polybutadienkautschuk, der 30 bis 90% Vinyl-1,2-Gruppen enthält, und 3,4-Polyisoprenelastomer, wobei das 3,4-Polyisoprenelastomer in einem Bereich von 5 20 ThK in der Kautschukzusammensetzung verwendet wird.

7. Reifen nach mindestens einem der vorhergehenden Ansprüche, wobei das Organoalkoxymercaptosilan aus mindestens einem von Triethoxymercaptopropylsilan, Trimethoxymercaptopropylsilan, Methldimethoxymercaptopropylsilan, Methyldiethoxymercaptopropylsilan, Dimethylmethoxymercaptopropylsilan, Triethoxymercaptoethylsilan, Tripropoxymercaptopropylsilan, Ethoxydimethoxymercaptopropylsilan, Ethoxydiisopropoxymercaptopropylsilan, Ethoxydidodecyloxymercaptopropylsilan und Ethoxydihexadecyloxymercaptopropylsilan ausgewählt ist.

8. Reifen nach mindestens einem der vorhergehenden Ansprüche, wobei der Kautschukverstärkungsfüllstoff weiter ausgefälltes Silika zusammen mit einem Kopplungsmittel umfasst, wobei das endgruppenverschlossene Organoalkoxymercaptosilan ein flüssiges 3-Octanoylthio-1-propyltriethoxysilan ist.

9. Kautschukzusammensetzung, umfassend, auf Basis von Gewichtsteilen pro 100 Gewichtsteilen Elastomer (ThK),

   a) 100 ThK Elastomere, umfassend:

   (1) 5 bis 50 ThK Polybutadienelastomer, umfassend ein zinngekoppeltes, amin-endfunktionalisiertes Polybutadienelastomer, und
   (2) 50 bis 95 ThK mindestens eines zusätzlichen Elastomers auf Basis konjugierten Diens, ausgewählt aus Polymeren von Isopren, Copolymeren von Isopren und 1,3-Butadien und Copolymeren von Styrol und mindestens einem von Isopren und 1,3-Butadien; und

   b) 35 bis 120 ThK Kautschukverstärkungsfüllstoff, wobei der Verstärkungsfüllstoff nanostrukturiertes Inversions-Carbon Black umfasst, wobei die Kautschukzusammensetzung weiter ausgefälltes Silika zusammen mit einem Kopplungsmittel umfasst, und wobei das Kopplungsmittel ist:

   eine Organoalkoxymercaptosilanzusammensetzung der allgemeinen Formel (I), dargestellt als

$$\text{(I)} \qquad (X)_n(R^7O)_{3-n}\text{-Si-}R_8\text{-SH}$$

   wobei X ein Radikal ist, ausgewählt aus Chlor, Brom und Alkylradikalen mit einem bis 16 Kohlenstoffatomen; wobei $R^7$ ein Alkylradikal mit 1 bis einschließlich 18 Kohlenstoffatomen ist; wobei $R_8$ ein Alkylenradikal mit einem bis 16 Kohlenstoffatomen, bevorzugt ein Propylenradikal, ist; und n ein Durchschnittswert von null bis einschließlich 3 ist und wobei, in solchen Fällen, wo n null oder 1 ist, $R^7$ für jeden $(R^7O)$-Anteil in der Zusammensetzung das gleiche oder verschieden sein kann; oder
   ein Organoalkoxymercaptosilan in einer Form des besagten Organoalkoxymercaptosilans der allgemeinen Formel I, dessen Mercaptoanteil mit einem Anteil endgruppenverschlossen ist, der seine Mercaptogruppe öffnen kann.

**Revendications**

1. Bandage pneumatique possédant une bande de roulement d'une composition de caoutchouc comprenant, en se basant sur des parties en poids par 100 parties en poids d'élastomère (phr) :

   a) à concurrence de 100 phr, des élastomères comprenant :

(1) à concurrence de 5 à 50 phr, un élastomère de polybutadiène comprenant un élastomère de polybutadiène fonctionnalisé, du type dont l'extrémité contient une amine couplée à l'étain, et

(2) à concurrence de 50 à 95 phr, au moins un élastomère conjugué à base diénique choisi parmi le groupe comprenant des polymères de l'isoprène, des copolymères de l'isoprène et du 1,3-butadiène et des copolymères du styrène et d'au moins un membre choisi parmi le groupe comprenant l'isoprène et le 1,3-butadiène ; et

b) à concurrence de 35 à 120 phr, une matière de charge pour le renforcement du caoutchouc, ladite matière de charge pour le renforcement du caoutchouc comprenant du noir de carbone d'inversion nanostructuré, la composition de caoutchouc comprenant en outre de la silice précipitée conjointement avec un agent de couplage, ledit agent de couplage représentant :

une composition d'organoalcoxymercaptosilane répondant à la formule générale (I) :

$$(I) \qquad (X)_n(R^7O)_{3-n} - Si - R_8\text{-}SH$$

dans laquelle X représente un radical choisi parmi un radical de chlore, un radical de brome et un radical alkyle, contenant de 1 à 16 atomes de carbone ; $R^7$ représente un radical alkyle contenant de 1 à 18 atomes de carbone ; $R_8$ représente un radical alkylène contenant de 1 à 16 atomes de carbone, de préférence un radical propylène ; et n prend une valeur moyenne de 0 à 3 ; et

dans laquelle, lorsque n est égal à zéro ou est égal à 1, $R^7$ peut être identique ou différent pour chaque fraction $(R^7O)$ dans la composition ; ou bien

un organoalcoxymercaptosilane sous la forme dudit organoalcoxymercaptosilane répondant à la formule générale I dans lequel la fraction mercapto est protégée avec une fraction qui est en mesure de déprotéger son groupe mercapto.

2. Bandage pneumatique selon la revendication 1, dans lequel ledit noir de carbone d'inversion nanostructuré possède :

(A) une courbe de distribution granulométrique dont la pente absolue (AS) est inférieure à 400.000 nm$^3$ et supérieure à 100.000 nm$^3$, la pente absolue (AS) étant déterminée à partir de la mesure de la distribution des dimensions d'agrégats en utilisant la formule suivants :

$$AS = \frac{\sum_{i=1}^{k} H_i(x_i - \bar{x})^3}{\sum_{i=1}^{k} H_i}$$

dans laquelle $H_i$ représente la fréquence à laquelle le diamètre de particule $x_i$ apparaît et x représente le diamètre des particules de l'agrégat dont le poids correspond à la granulométrie moyenne de l'agrégat de noir de carbone, la somme étant mise en oeuvre dans la plage de 1 à 3000 nm dans un écartement équidistant pour chaque nanomètre ; et/ou

(B) une valeur CTAB (ASTM D-3765) dans la plage de 20 à 190 m$^2$/g ; et/ou

(C) une valeur d'absorption 24M4-DBP (ASTM D-3493) dans la plage de 40 à 140 cm$^3$/100 g.

3. Bandage pneumatique selon l'une quelconque des revendications précédentes, dans lequel ladite matière de charge pour le renforcement du caoutchouc, en une quantité de 35 à 120 phr, comprend :

(A) à concurrence de 30 à 100 phr, ledit noir de carbone d'inversion nanostructuré ; et

(B) à concurrence de 5 à 90 phr, au moins un noir de carbone pour le renforcement du caoutchouc possédant une combinaison d'une valeur d'absorption d'iode (ASTM D-1510) dans la plage de 90 à 150 g/kg et une valeur DBP (ASTM D-2414) dans la plage de 100 à 200 cm$^3$/100 g.

4. Bandage pneumatique selon au moins une des revendications précédentes, dans lequel ladite matière de charge pour le renforcement du caoutchouc, en une quantité de 35 à 120 phr, comprend :

(A) à concurrence de 5 à 90 phr, ledit noir de carbone d'inversion nanostructuré ; et

(B) à concurrence de 10 à 85 phr, de la silice précipitée sur laquelle on trouve des groupes hydroxyle ; et

(C) le cas échéant un agent de couplage pour ladite silice précipitée, possédant une fraction apte à réagir avec lesdits groupes hydroxyle sur ladite silice précipitée et une autre fraction différente apte à entrer en interaction avec ledit élastomère de polybutadiène et avec ledit élastomère supplémentaire conjugué à base diénique.

5. Bandage pneumatique selon au moins une des revendications précédentes, dans lequel on prépare ladite amine couplée à l'étain et ledit élastomère de polybutadiène fonctionnalisé en faisant réagir du polybutadiène fonctionnalisé possédant une amine « vivante » à son extrémité, contenant du lithium à titre de groupes terminaux, avec du tétrachlorure d'étain.

6. Bandage pneumatique selon au moins une des revendications précédentes, dans lequel ledit élastomère supplémentaire conjugué à base diénique représente au moins un membre choisi parmi le groupe comprenant le caoutchouc naturel de cis-1,4-polyisoprène, le caoutchouc synthétique de cis-1,4-polyisoprène, le cis-1,4-polybutadiène, des copolymères de styrène/butadiène, des copolymères d'isoprène/butadiène, des terpolymères de styrène/isoprène/butadiène, du caoutchouc de polybutadiène à haute teneur vinylique contenant des groupes vinyle 1,2 à concurrence de 30 à 90 %, et un élastomère de 3,4-polyisoprène, ledit élastomère de 3,4-polyisoprène étant utilisé dans une plage de 5 à 20 phr dans ladite composition de caoutchouc.

7. Bandage pneumatique selon au moins une des revendications précédentes, dans lequel ledit organoalcoxymercaptosilane représente au moins un membre choisi parmi le groupe comprenant le triéthoxy mercaptopropyl silane, le triméthoxy mercaptopropyl silane, le méthyl diméthoxy mercaptopropyl silane, le méthyl diméthoxy mercaptopropyl silane, le diméthyl méthoxy mercaptopropyl silane, le triéthoxy mercaptoéthyl silane, le tripropoxy mercaptopropyl silane, l'éthoxy diméthoxy mercaptopropylsilane, éthoxy diisopropoxy mercaptopropylsilane, l'éthoxy didodécyloxy mercaptopropylsilane et l'éthoxy dihexadécyloxy mercaptopropylsilane.

8. Bandage pneumatique selon au moins une des revendications précédentes, dans lequel ladite matière de charge pour le renforcement du caoutchouc comprend en outre de la silice précipitée conjointement avec un agent de couplage, ledit organoalcoxymercaptosilane protégé représentant un 3-octanoylthio-1-propyltriéthoxysilane liquide.

9. Bandage pneumatique comprenant, en se basant sur des parties en poids par 100 parties en poids d'élastomère (phr) :

(A) à concurrence de 100 phr, des élastomères comprenant :

(1) à concurrence de 5 à 50 phr, un élastomère de polybutadiène comprenant un élastomère de polybutadiène fonctionnalisé, du type dont l'extrémité contient une amine couplée à l'étain, et

(2) à concurrence de 50 à 95 phr, au moins un élastomère conjugué à base diénique choisi parmi le groupe comprenant des polymères de l'isoprène, des copolymères de l'isoprène et du 1,3-butadiène et des copolymères du styrène et d'au moins un membre choisi parmi le groupe comprenant l'isoprène et le 1,3-butadiène ; et

(A) à concurrence de 35 à 120 phr, une matière de charge pour le renforcement du caoutchouc, ladite matière de charge pour le renforcement du caoutchouc comprenant du noir de carbone d'inversion nanostructuré, la composition de caoutchouc comprenant en outre de la silice précipitée conjointement avec un agent de couplage, ledit agent de couplage représentant :

une composition d'organoalcoxymercaptosilane répondant à la formule générale (I) :

**(I) $(X)_n(R^7O)_{3-n}$ - Si - $R_8$-SH**

dans laquelle X représente un radical choisi parmi un radical de chlore, un radical de brome et un radical alkyle, contenant de 1 à 16 atomes de carbone ; $R^7$ représente un radical alkyle contenant de 1 à 18 atomes de carbone ; $R_8$ représente un radical alkylène contenant de 1 à 16 atomes de carbone, de préférence un radical propylène ; et n prend une valeur moyenne de 0 à 3 ; et dans laquelle, lorsque n est égal à zéro ou est égal à 1, $R^7$ peut être identique ou différent pour chaque fraction $(R^7O)$ dans la composition ; ou bien un organoalcoxymercaptosilane sous la forme dudit organoalcoxymercaptosilane répondant à la formule générale I dans lequel la fraction mercapto est protégée avec une fraction qui est en mesure de déprotéger son groupe mercapto.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6056933 B
- US 6251983 B
- US 6211321 B
- US 6111045 B
- US 5115006 B
- DE 195565 A

### Non-patent literature cited in the description

- The Vanderbilt Rubber Handbook. 1978, 417
- **J. FROHLICH ; W. NEIDERMEIR ; H. LUGINS-LAND.** The Effect of Filler-Filler and Filler-Elastomer Interaction on Rubber Reinforcement. *Composites: Part A from ''Science Direct,* 2004, www.sciencedirect.com
- **H. A. PALOWSKI et al.** *Rubber World,* June 1992
- *Rubber & Plastics News,* 26 April 1993